# EUROPEAN PATENT SPECIFICATION

(11) **EP 0 845 666 B1**
(45) Date of publication and mention of the grant of the patent: **08.09.1999**
(21) Application number: 96830600.1
(22) Date of filing: 29.11.1996
(51) Int. Cl.: G01M 15/00

(54) **Testing equipment for motor vehicle internal combustion engines**
Testvorrichtung zum Prüfen von Kraftfahrzeug-Brennkraftmaschinen
Equipement d'essai pour moteurs à combustion interne de véhicules

(43) Date of publication of application: 03.06.1998
(73) Proprietor: Integra Spa, 10125 Trofarello (TO) (IT)
(72) Inventor: Grosso, Carlo, 12042 Bra (Cuneo) (IT)
(74) Representative: Buzzi, Franco

(56) References cited:
- EP-A- 0 484 848
- GB-A- 2 270 347
- MTZ MOTORTECHNISCHE ZEITSCHRIFT, vol. 56, no. 6, June 1995, STUTTGART DE, pages 358-362, XP000508223 B. MAHR ET AL.: "INSTATIONÄRPRÜFSTAND FÜR STANDARDMOTOREN, ERDGASMOTOREN UND WASSERSTOFFMOTOREN"

## Description

The present invention is related to a testing equipment for internal combustion engines of motor vehicles, of the type comprising a thermally and acoustically insulated closed environment, within which a programmable testing bench is arranged including support means and braking means of the engine, control means of the operating conditions of the engine, and acquirement means of operating data of the engine.

Such testing equipment enables, as it is well known, to carry out measurements of power, consumption and more generally of the operating mode of the engine as a whole and of the components thereof, through a preset sequence of testing conditions during which the related operating data are detected and acquired.

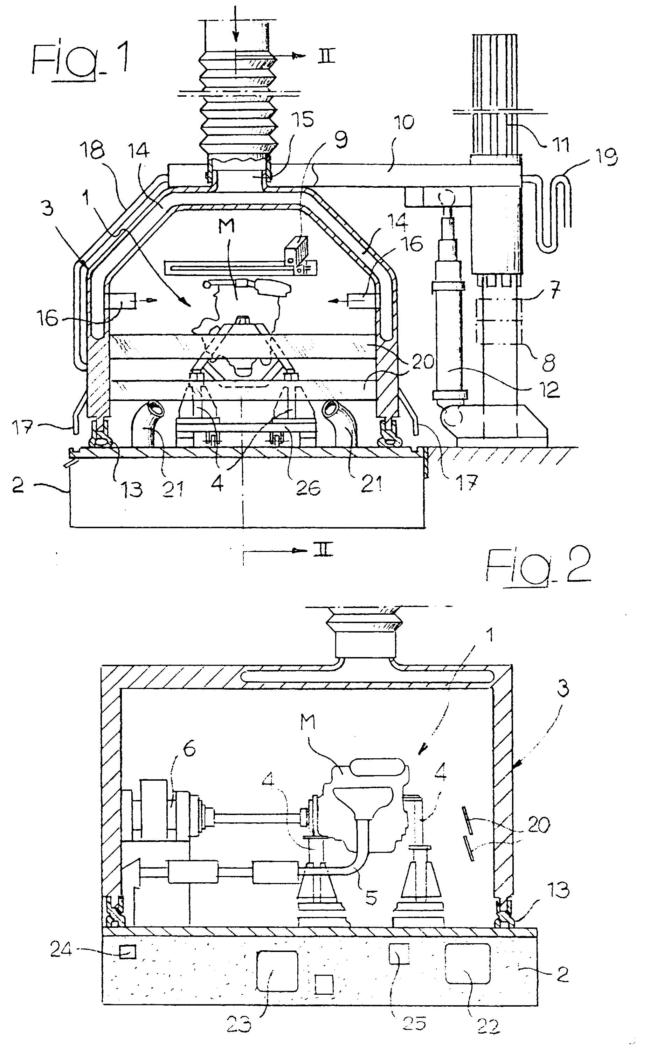

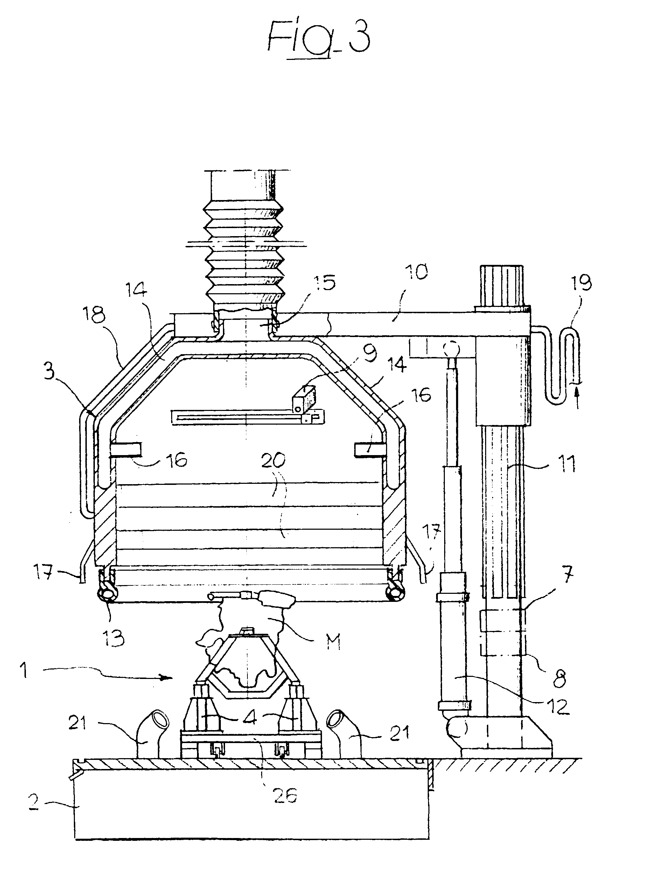

Traditionally, and as disclosed in GB-A-2270347 with reference to Figures 34,35 as well as in the the publication MTZ, no.6, June 1995, Stuttgart, page 360 Figure 3, the closed environment within which the testing bench is arranged is constituted by a large masonry or prefabricated room which, besides involving evident problems from the point of view of encumbrance and manufacturing costs, exhibits several limits deriving from the practical impossibility to faithfully reproduce the actual operative and environmental conditions corresponding to the installed configuration of the engine under test inside the vehicle engine compartment. As a consequence, in order to complete the tests under these actual operative and environmental conditions, it is generally necessary to further perform testing of prototype vehicles equipped with the engine under test, through roller benches or road checking. Evidently this involves remarkable additional costs.

A further inconvenience of the conventional testing bench equipment resides in the difficulty to precisely control, inside the wide room environment, the atmospheric conditions in terms of temperature, pressure and humidity during testing.

Moreover the above-referenced conventional testing equipment is affected by safety problems from the firefighting point of view inside the testing room environment.

In GB-A-2270347, already mentioned in the above, said closed environment defined by a restricted open-bottom housing displaceable between an operative condition in which it hermetically encloses said test bench and an inoperative condition in which access to said test bench is open. This restricted open-bottom housing is formed by a cover in one tiltable piece or in a series of mutually sliding elements or bellows formation, and its function is merely to effect sound proofing and dust proofing and also to provide safety outside the cover even if a trouble occurs in the internal combustion engine.

EP-A-0484848 discloses a testing device for spacecraft equipment formed by a vertically displaceable substantially bell-like housing containing a light gas.

The object of the present invention is to overcome the above drawbacks, and more particularly to provide a testing equipment for motor vehicle internal combustion engines of the type set forth at the beginning, which on one side allows to drastically reduce manufacturing costs, and on the other side enables to reproduce with the highest precision the real operating and environmental running conditions of the engine under test in the installed configuration thereof within the vehicle engine compartment.

A further object of the invention is to provide a testing equipment of the type set forth at the beginning having high operating efficiency and realability, together with a better anti-fire safety.

According to the invention, these objects are achieved by the features set forth in the characterising part of claim 1. In the following description, the restricted open-bottom housing shall be named for the sake of brevity as "bell-like housing", even if the general design thereof is not precisely corresponding to a bell.

To displace the housing between the operative and inoperative conditions, the invention conveniently provides a lifting and traversing motor-driven system.

Due to the above-mentioned features, the testing equipment according to the invention avoids employing masonry structures, which remarkably reduces the manufacturing and installation costs thereof. In the installed condition, the encumbrance of the testing equipment according to the invention is extremely reduced, and the limited volume of the environment enclosed by the housing is more easily controllable in terms of temperature, pressure/vacuum and humidity. Moreover, the means for inletting and orienting the engine ventilation air flow into the bell-like housing enable to faithfully reproduce the real operative condition of the engine corresponding to installation thereof even on bord of motor vehicles of different types, and corresponding to different environments and runs.

Summing up, the advantages deriving from the above features of the testing equipment according to the invention can be summarized as follows:
- suppression of the need of time-consuming tests of the engine installed on board of prototype vehicles, running on road or by means of roller-type benches and associated guiding plants and systems;
- shortened engine testing and set up times;
- lower manufacturing costs of the testing equipment;
- larger available space for the instrumentation dedicated to the measurements;
- easy simulation of even extreme climatic and environmental conditions.

According to another aspect of the invention, the braking means of the testing bench are comprised of a dynamic brake operating over four quadrants. This features enables the engine under test to more easily undergo operating modes equivalent to a set run, in terms both of delivered power and rotation speed of the engine. This result, together with the data which can be acquired in connection to the actual temperature within the vehicle engine compartment, to the temperature of the engine exhaust line assembly and to operation corresponding to different altitudes, allows testing to be carried out under conditions which are almost identical to those corresponding to real use of the engine installed on board of a vehicle.

Further features and advantages of the invention will became apparent from the following detailed description, with reference to the accompanying drawings purely provided by way of non limiting example, in which:
- Figure 1 is a partially vertically sectioned diagrammatic view of a testing equipment for motor vehicle internal combustion engines according to the invention, shown in an operative condition,
- Figure 2 is a partial and partially sectioned view along line II-II of figure 1, and
- Figure 3 is a view same as figure 1 showing the inoperative condition of the testing equipment.

Referring to the drawings, the equipment according to the invention for testing an internal combustion engine M for motor vehicles essentially comprises a dynamic bench 1 supported by an aseismatic basement 2 and arranged within a circumscribed closed environment, thermally and acoustically insulated from the outside, delimited by a substantially bell-like housing 3.

The dynamic bench 1 is designed so as to exactly reproduce the mounting conditions of the engine M within the engine compartment of a motor vehicle. To such effect, the bench 1 comprises a mount 26 supported by the basement 2 and bearing attachment and suspension members, generally designated as 4, supporting the engine M, as well as an exhaust assembly 5 for discharge of the combustion gas of the engine M.

The primary element of the bench 1 is constituted by a dynamic brake 6 operatively connected to the shaft of the engine M and operating over four quadrants (braking/entrainment-clockwise/anti-clockwise), and thus capable of subjecting the engine M to operating modes equivalent to a determined run. By means of a proper electronic control apparatus provided outside of the bell-like housing 3, generally designated as 7, the dynamic bench 1 is programmable through suitable algorithms so as to reproduce all the operating characteristics which are available or can be envisaged in connection with the vehicle on which the engine M is intended to be installed. The operating data are detected through proper sensors and transducers, not shown in detail since of a generally conventional type, by means of which the detected data are supplied to an outher check panel, generally indicated as 8. Operation of the engine M during testing is further controlled by means of one or more video-cameras 9, and even with the aid of microphones (not shown) for detecting the running noise.

The bell-like housing 3, which may be made of any suitable material, has a thermally and acoustically insulated whole structure. The size of the bell-like housing 3 is the minimum necessary to enclose the dynamic bench 1 assembly.

The bell-like housing 3 is connected superiorly to a horizontal boom 10 cantilever supported in a traversable, i.e. rotable, way as well as in a vertically slidable way, by a column mast 11. The boom 10 is vertically displaceable by means of a fluid pressure linear actuator 12 and is angularly displaceable around the axis of the column 11 by means of a further motor-driven actuator of any suitable type, not shown in the drawings.

Accordingly, the bell-like housing 3 can be moved between the operative condition shown in figures 1 and 2, in which it hermetically encloses the dynamic bench 1, and the inoperative condition depicted in figure 3, in which access to the test bench 1 is open. In the operative condition, tightness of the environment delimited by the bell-like housing 3 and enclosing therewithin the dynamic bench 1 with the engine M, is ensured by an angular sealing gasket 13 applied on the base edge of the bell-like housing 3 and bearing against the top of the basement 2.

The bell-like housing 3 is provided with inner passages 14 communicating at one side with an upper duct 15 and at the other side with inner outflow nozzles 16, for the supply of combustion air under controlled temperature and humidity to the engine M. The bell-like housing 3 is further provided with outer tubings 17 for condensate discharge, and the environment enclosed by this housing 3 is also connected, through one or more outer ducts 18, with an antifire system, generally indicated as 19, for sprinkling fire extinguishing substances over the engine M in case of fire. Such event is detected by means of suitable optical and temperature sensors, not shown in detail since of a generally conventional type.

Inside, the bell-like housing 3 bears deflectors or baffle plates 20, which are interchangeable and possibly orientable, intended to direct towards the engine M fitted on the bench 1 ventilation air flows supplied through nozzles 21 projecting from the basement 2, to the aim of simulating with the highest precision the real operative condition of the engine itself in the installed configuration thereof within the engine compartment of a running vehicle. The nozzles 21 communicate with a ventilation air passage 22 (figure 2) provided within the basement 2.

This basement 2 is further provided with additional passages 23, 24 and 25, respectively intended for drawing out under controlled vacuum the ventilation air supplied into the bell-like housing 3 through the nozzles 16, for drawing out the combustion gas coming from the exhaust assembly 5, and for the conditioning of the operating fluids (lubricating oil, refrigerating liquid, supercharge air, if provided, fuel) of the engine M, by means of corrisponding outer heat exchangers.

In operation, the environment circumscribed by the bell-like housing 3 within which the engine M installed on the dynamic bench 1 is arranged, is controlled in terms of temperature and high-low pressure (altitude) so as to faithfully reproduce all envisageable environmental running conditions of the engine M. Inlet of the ventilation air for the engine M through the nozzles 21 and the arrangement of the baffle plates 20 are likewise controlled so as to faithfully simulate the operative conditions of the engine M as is it were installed within the engine compartment of a running vehicle. The other dynamic operating conditions, equivalent to a predetermined run, are controlled by properly programming the dynamic brake 6. Accordingly, the data detected by the related sensors and transducers, and displayed and logged in through the check panel 8, enable to acquire all results corrisponding to a precise simulation of the operating conditions of the engine M comparable to the operating conditions thereof on board of a running vehicle, in terms of power and rotation speed of the engine, temperature within the engine compartment, temperature of the exhaust assembly line, outer temperature and altitude.

At the end of testing, the dynamic bench 1 can be easily and quickly cleared, positioning the bell.like housing 3 into the inoperative condition shown in figure 3, so as to allow removal of the engine M and installation of another engine for a subsequent testing cycle.

Naturally the details of construction and the embodiments of the testing equipment according to the invention may be widely varied with respect to what has been disclosed and illustrated, without thereby departing from the scope of the present invention, such as defined in the appended claims.

## Claims

1. Testing equipment for motor vehicle internal combustion engines comprising a thermally and acoustically insulated closed environment within which a programmable test bench (1) is arranged, including support means (4) and braking means (6) of the engine (M), control means (7) of the operating conditions of the engine (M) and acquirement means (8) of the operating data of the engine (M), said closed environment being defined by a restricted open-bottom housing (3) displaceable between an operative condition in which it hermetically encloses said test bench (1) and an inoperative condition in which access to said test bench (1) is open, characterised in that said test bench (1) is a dynamic test bench and said open-bottom housing (3) is provided with reproduction means (20, 21) of real thermal and environmental conditions of the engine (M) in the installed configuration within a vehicle engine compartment, said reproduction means including means for inletting (21) and orienting (20) a ventilation air flow of the engine (M) inside said housing (3) and temperature and high-low pressure control means inside said housing (3); said housing (3) being formed with supply passages (14) of the engine combustion air under controlled temperature and humidity.

2. Equipment according to claim 1, characterized in that an anti-fire system (18, 19) is further associated to said housing (3) to sprinkle fire extinguishing substances over the test bench (1).

3. Equipment according to any of the preceding claims, characterized in that it comprises a motor-driven lifting and traversing device (10, 11, 12) of the housing (3) between said operative and inoperative conditions.

4. Equipment according to any of the preceding claims, characterized in that said braking means of the test bench (1) comprise a dynamic brake (6) operating over four quadrants.

5. Equipment according to any of the preceding claims, characterized in that it comprises a basement (2) supporting said dynamic test bench (1) and in that in said operative conditions the housing (3) bears upon said basement (2) through annular seal means (13).

6. Equipment according to claim 5, characterized in that the support means of the dynamic test bench (1) comprise a mount (26) arranged on said basement (2) and provided with attachment and suspension members (4) of the engine (M) corresponding to those of a vehicle engine compartment.

7. Equipment according to the preceding claims, characterized in that said basement (2) is formed with a first passage (22) for admitting ventilation air of the engine (M), a second passage (23) for withdrawal of the ventilation air of the engine (M), a third passage (24) for outletting the exhaust gas of the engine (M), and a fourth passage (25) for conditioning of operating fluids of the engine (M).

## Patentansprüche

1. Testvorrichtung für Kraftfahrzeug-Brennkraftmaschinen mit einem thermisch und akustisch isolierten, abgeschlossenen Umgebungsraum, in dem eine programmierbare Testbank (1) angeordnet ist, mit einer Tragvorrichtung (4) und eine Bremsvorrichtung (6) der Maschine (M), einer Steuervorrichtung (7) für die Betriebsbedingungen der Maschine (M) und einer Erfassungsvorrichtung (8) für die Betriebsdaten der Maschine (M), wobei der abgeschlossene Umgebungsraum durch ein begrenztes Gehäuse (3) mit offenem Boden definiert ist, das zwischen einer Betriebsstellung, in der es die Testbank (1) hermetisch einschließt, und einer Ruhestellung verstellbar ist, bei der Zugang zur Testbank(1) offen ist, dadurch gekennzeichnet, daß die Testbank (1) eine dynamische Testbank ist und das Gehäuse (3) mit offenem Boden mit Vorrichtungen (20, 21) zur Reproduktion wirklicher thermischer und Umweltbedingungen der Maschine (M) im in einem Fahrzeug-Motorraum eingebauten Zustand ausgerüstet ist, wobei die Reproduktionsvorrichtungen eine Vorrichtung zum Einlassen (21) und Ausrichten (20) eines Ventilationsluftstroms der Maschine (M) innerhalb des Gehäuses (3) sowie Vorrichtungen zur Temperatur- und Hoch' niedrig- Drucksteuerung innerhalb des Gehäuses (3) umfassen, wobei das Gehäuse (3) mit Zufuhrleitungen (14) für die Verbrennungsluft der Maschine bei gesteuerter Temperatur und Feuchtigkeit ausgebildet ist.

2. Testvorrichtung nach Anspruch 1, dadurch gekennzeichnet, daß in dem Gehäuse (3) außerdem ein Feuerlösch-System (18, 19) untergebracht ist, um feuerlöschende Substanzen über die Testbank (1) zu sprühen.

3. Testvorrichtung nach einem der vorhergehenden Ansprüchen, dadurch gekennzeichnet, daß es ein motorisch angetriebenes Hebe- und Verschiebegerät (10, 11, 12) des Gehäuses (3) zwischen Betriebs- und Ruhestellung aufweist.

4. Testvorrichtung nach einem der vorhergehenden Ansprüche, dadurch gekennzeichnet, daß die Bremsvorrichtung der Testbank (1) eine dynamische Bremse (6) umfaßt, die über vier Quadranten arbeitet.

5. Testvorrichtung nach einem der vorhergehenden Ansprüche, dadurch gekennzeichnet, daß sie ein Fundament (2) umfaßt, das die dynamische Testbank (1) trägt, und daß in der Betriebsstellung das Gehäuse (3) über eine ringförmige Dichtvorrichtung (13) auf dem Fundament (2) aufliegt.

6. Testvorrichtung nach Anspruch 5 dadurch gekennzeichnet, daß die Tragevorrichtung der dynamischen Testbank (1) einen Sockel (26) umfaßt, der auf dem Fundament (2) angeordnet und mit Befestigungs- und Aufhängungsmitteln (4) für die Maschine (M) versehen ist, die denen eines Fahrzeug-Motorraumes entsprechen.

7. Testvorrichtung nach einem der vorhergehenden Ansprüche, dadurch gekennzeichnet, daß das Fundament (2) mit einem ersten Durchlaß (22) zum Einleiten von Ventilationsluft für die Maschine (M), einem zweiten Durchlaß (23) für das Ausleiten der Ventilationsluft von der Maschine (M), einen dritten Durchlaß (24) für das Auslassen des Auspuffgases der Maschine (M), und einem vierten Durchlaß (25) zum Konditionieren der Betriebsfluids der Maschine (M) versehen ist.

## Revendications

1. Appareillage d'essais pour moteurs à combustion interne de véhicule à moteur, comprenant un environnement fermé et isolé thermiquement et acoustiquement à l'intérieur duquel est monté un banc d'essais programmable (1), comprenant un dispositif (4) de support et un dispositif (6) de freinage du moteur (M) , un dispositif (7) de commande destiné à régler les conditions de fonctionnement du moteur (M), et un dispositif (8) d'acquisition de données de fonctionnement du moteur (M), l'environnement fermé étant délimité par un boîtier (3) ouvert au fond et de dimension limitée, déplaçable entre un état de fonctionnement dans lequel il entoure hermétiquement le banc d'essais (1) et un état de repos dans lequel l'accès au banc d'essais (1) est libre, caractérisé en ce que le banc d'essais (1) est un banc d'essais dynamiques, et le boîtier (3) à partie inférieure ouverte comporte un dispositif de reproduction (20, 21) des conditions thermiques et d'environnement réelles du moteur (M) dans la configuration installée dans un compartiment de moteur de véhicule, le dispositif de reproduction comprenant un dispositif destiné à introduire (21) et orienter (20) un courant d'air de ventilation du moteur (M) vers l'intérieur du boîtier (3), et un dispositif de réglage de température et de pression élevées-faibles à l'intérieur du boîtier (3), le boîtier (3) étant réalisé avec des passages d'alimentation (14) d'air de combustion du moteur ayant une température et une humidité réglées.

2. Appareillage selon la revendication 1, caractérisé en ce qu'un système de lutte contre l'incendie (18, 19) est en outre associé au boîtier (3) afin qu'il pulvérise des substances d'extinction d'incendie sur le banc d'essais (1).

3. Appareillage selon l'une quelconque des revendications précédentes, caractérisé en ce qu'il comprend un appareil (10, 11, 12) entraîné par un moteur et destiné au levage et au déplacement du boîtier (3) entre les positions de fonctionnement et de repos.

4. Appareillage selon l'une quelconque des revendications précédentes, caractérisé en ce que le dispositif de freinage du banc d'essais (1) comprend un frein dynamique (6) travaillant sur quatre quadrants.

5. Appareillage selon l'une des revendications précédentes, caractérisé en ce qu'il comprend un sous-sol (2) de support du banc d'essais dynamiques (1), et en ce que, dans les conditions de fonctionnement, le boîtier (3) est en appui sur le sous-sol (2) par l'intermédiaire de dispositifs annulaires d'étanchéité (13).

6. Appareillage selon la revendication 5, caractérisé en ce que le dispositif de support du banc d'essais dynamiques (1) comprend une monture (26) placée sur le sous-sol (2) et ayant des organes (4) de fixation et de suspension du moteur (M) qui correspondent à ceux d'un compartiment du moteur d'un véhicule.

7. Appareillage selon les revendications précédentes, caractérisé en ce que le sous-sol (2) est réalisé avec un premier passage (22) d'admission d'air de ventilation du moteur (M), un second passage (23) d'évacuation de l'air de ventilation du moteur (M), un troisième passage (24) d'évacuation des gaz d'échappement du moteur (M), et un quatrième passage (25) de conditionnement des fluides de fonctionnement du moteur (M).
